# EUROPEAN PATENT SPECIFICATION

(11) **EP 4 231 136 B1**
(45) Date of publication and mention of the grant of the patent: **03.07.2024**
(21) Application number: 21879310.7
(22) Date of filing: 09.10.2021
(51) Int. Cl.: G06F 7/523, G06F 7/74, G06F 7/76

(54) **GENERATION CIRCUIT FOR ZERO FLAG BIT OF MULTIPLIER, AND MULTIPLIER AND DETECTION METHOD**
ERZEUGUNGSSCHALTUNG FÜR NULLFLAG-BIT EINES MULTIPLIKATORS SOWIE MULTIPLIKATOR UND DETEKTIONSVERFAHREN
CIRCUIT GÉNÉRATEUR POUR BIT INDICATEUR DE ZÉRO DE MULTIPLICATEUR, MULTIPLICATEUR ET PROCÉDÉ DE DÉTECTION

(30) Priority: 14.10.2020 CN 202011097310
(43) Date of publication of application: 23.08.2023
(73) Proprietor: Shanghai Chipon Micro-Electronic Co., Ltd, Shanghai 201203 (CN)
(72) Inventor: HUANG, Peng, Shanghai 201203 (CN); DING, Xiaobing, Shanghai 201203 (CN); ZHU, Shaohua, Shanghai 201203 (CN); FENG, Chaobin, Shanghai 201203 (CN)
(74) Representative: Inspicos P/S
(86) International application number: PCT/CN2021/122874
(87) International publication number: WO 2022/078265

(56) References cited:
- CN-A- 101 819 513
- CN-A- 105 183 424
- CN-A- 110 377 267
- CN-A- 112 230 883
- US-A1- 2013 080 740
- US-A1- 2019 102 190

## Description

### BACKGROUND OF THE INVENTION

### 1. Technical Field

The invention relates to the technical field of integrated circuits, in particular to a generating circuit for the zero flag bit of a multiplier, the multiplier and a detecting method.

### 2. Description of Related Art

In a 32-bit architecture MCU, the common multiplier is a 32 × 32 structure with a low 32-bit result. To improve operational efficiency, the multiplier usually uses a single cycle. Due to the longer critical path of the multiplier, the multiplier usually takes a long time. Compared with other instructions, there will be a result of limiting the running frequency, so during the actual design process, the operation results of the multiplier need to be accelerated as much as possible.

US 2013/080740 A1 is prior art.

### BRIEF SUMMARY OF THE INVENTION

The present invention provides a generating circuit for the zero flag bit of a multiplier, the multiplier and a detecting method to solve the problem that longer operation time of the existing multiplier limits the MCU operation frequency.

The purpose of the present invention may be implemented by the following technical solutions:

A generating circuit for the zero flag bit of a multiplier is used for application of the multiplier which requires the number of bits of the to-be-solved multiplication operation result to be the same as that of the multiplicator and that of the multiplicand and includes a low-bit zero detecting module, a bitwise-AND module, and a result determining module, where the low-bit zero detecting module is used for discovering the bit in which the value of 1 appears first in the first input value from low bit to high bit, and replacing all bits from the bit to the highest bit with 1; the bitwise-AND module is used for reversing the order of the first input value bit by bit after replacement, and then carrying out a bitwise-AND logical operation on the first input value after order reversing and a second input value; and the result determining module is used for determining whether all the results of the logical AND operation are zero, if yes, the zero flag bit outputs 1, otherwise it outputs 0.

Further, the low-bit zero detecting module includes a plurality of detecting units in cascade connection; the cascading port of the later detecting unit is connected to the flag bit ports of all previous detecting units through an OR gate; each detecting unit is provided with input ports and output ports, where the number of the input ports is the same as that of the output ports; the input ports are used for determining whether there is a value of 1 in the input value, if yes, the flag bit outputs 1, the output of the detecting unit is the value corresponding to value 1 behind the bit from the bit to the highest bit of 1, otherwise the flag bit outputs 0, and the output of the detecting unit is directly the input value.

Further, the detecting unit includes four input ports and four output ports from low bit to high bit, namely, In0, In1, In2 and In3, and OutO, Out1, Out2 and Out3.

The input port In0 is connected to the output port OutO through two NOT gates and one OR gate sequentially connected in series to form a first path; the input port In1 is connected to the output port Out1 through a NOR gate, a NOT gate, and an OR gate sequentially connected in series to form a second path; the input port In2 is connected to the output port Out2 through a NOT gate, an NAND gate, and an OR gate sequentially connected in series to form a third path; and the input port In3 is connected to the output port Out2 through an NOR gate, an AND gate, and an OR gate sequentially connected in series to form a fourth path;

The input port of the NOR gate in the second path is further connected to the input port In0, and the output port of the NOR gate in the second path is also connected to the input ports of the NAND gates in the third and fourth paths;

The input port of the NOR gate in the fourth path is also connected to the input port In2;

The output ports of the NOR gates in the second and fourth paths are also connected to the flag bit port through the NAND gate;

The input ports of the OR gates in the first, second, third, and fourth paths are all connected to the cascading port.

Further, the result determining module is provided with a NOR gate.

A multiplier of the generating circuit for the multiplier zero flag bit as described above, including the generating circuit for the multiplier zero flag bit according to any one of claims 1-4 and a multiplication circuit.

A detecting method for the zero flag bit of fixed-length multiplication, is used for application of the multiplier through which the number of bits of the multiplication operation result is the same as that of the multiplicator and that of the multiplicand and includes the following steps:
S1. detecting the first input value bit by bit from low bit to high bit until discovering the bit in which the value of 1 appears first, and replacing all bits from the bit to the highest bit with 1;
S2. reversing the order of the first input value bit by bit after replacement, and then carrying out a bitwise-AND logical operation on the first input value after order reversing and a second input value; and
S3. determining whether all the results of the bitwise-AND logical operation in S2 are zero, if yes, the zero flag bit outputs 1, otherwise it outputs 0.

Further, according to the number of bits of the multiplication operation result, the number of bits of the first input value and that of the second input value are processed by zerofill in the high bit or interception in the low bit, so that the number of bits of the multiplication operation result is the same as that of the first input value and that of the second input value.

Further, when the number of bits of the first input value is the same as that of the second input value but differs from that of the multiplication operation result, according to the number of bits of the multiplication operation result, the manner of zerofill in the high bits of the first input value and the second input value is adopted or the manner of intercepting the number of bits which is the same as that of the multiplication operation result from the low bits of the first input value and the second input value is adopted to ensure that the number of bits of the multiplication operation result is the same as that of the first input value and that of the second input value.

When the first input value, the second input value, and the multiplication operation result have different numbers of bits, according to the number of bits of the multiplication operation result, the manner of zerofill in the high bits of the first input value or/and the second input value is adopted or the manner of intercepting the number of bits which is the same as that of the multiplication operation result from the low bits of the first input value or/and the second input value is adopted to ensure that the number of bits of the multiplication operation result is the same as that of the first input value and that of the second input value.

The beneficial technical effects of the present invention are as follows:

The low-bit zero detecting module is used to detect the low-bit continuous zero bits in the first input value, then, the bitwise-AND module is used to retain the low-bit continuous zero bits in the first input value and the second input value, and finally, the result determining module can output the zero flag bit calculation result which can also be obtained through multiplication of the first input value and the second input value. It is not necessary to calculate the zero flag bit according to the calculation result after the first input value and the second input value are multiplied. The zero flag bit can be obtained through parallel computing of the result determining module, and the first input value and the second input value to improve the operation speed of the multiplier. In addition, the entire circuit is compact in structure and high in practicality and is convenient for being popularized and promoted.

### BRIEF DESCRIPTION OF THE SEVERAL VIEWS OF THE DRAWINGS

FIG. 1 is a schematic structural diagram of the overall circuit of the present invention;
FIG. 2 is a schematic structural diagram of the low-bit zero detecting module of the present invention;
FIG. 3 is a schematic structural diagram of the detecting unit of the present invention; and
FIG. 4 is a schematic structural diagram of the result determining module of the present invention.

### DETAILED DESCRIPTION OF THE INVENTION

Embodiments of the present invention are further described in detail in conjunction with accompanying drawings below.

In general, the operation result of a multiplier consists of two parts: one is the multiplication, and the other is the generation of flag bits. The time required by the two parts determines the time taken to obtain the final multiplication result. While the multiplier mainly has two flag bits, namely negative flag bit and zero flag bit. The negative flag bit is simple to determine, and the zero flag bit will be generated after the multiplication operation is completed, which is not conducive to improving the operation speed of the multiplier. The present invention discloses a method of quickly generating zero flag bits based on the input of a multiplier to increase the multiplication operation speed, that is, the original serial computation method of calculating the zero flag bit after the multiplication operation result is generated is improved into a parallel computation method in which zero flag bit calculation and generation of the multiplication operation result can run simultaneously, so as to increase the operation speed of the multiplier.

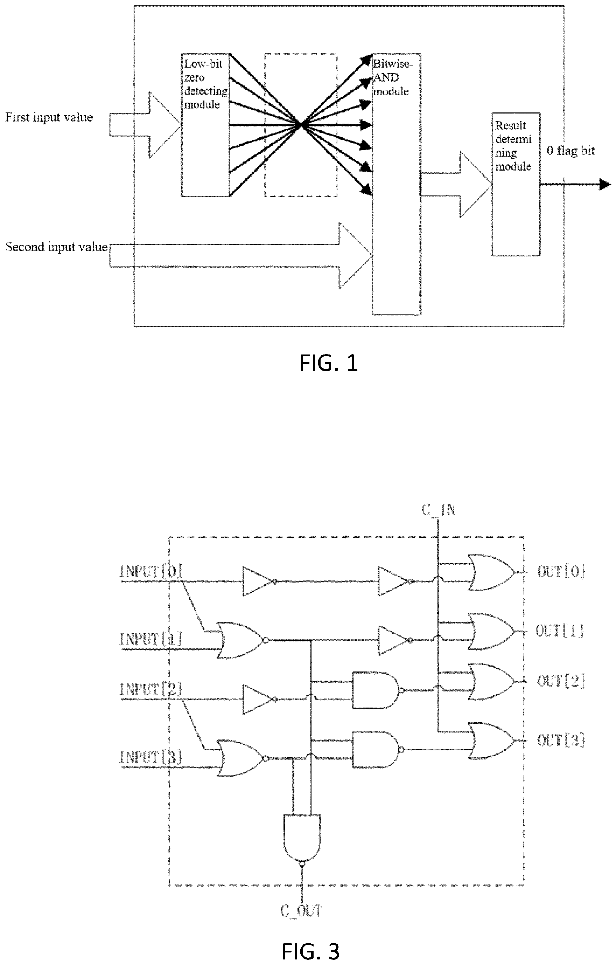

Refer to FIG. 1, the present invention provides a generating circuit for the zero flag bit of a multiplier. The generating circuit includes a low-bit zero detecting module, a bitwise-AND module, and a result determining module. The low-bit zero detecting module is used for discovering the bit in which the value of 1 appears first in the first input value from low bit to high bit, and replacing all bits from the bit to the highest bit with 1; the bitwise-AND module is used for reversing the order of the first input value bit by bit after replacement, and then carrying out a bitwise-AND logical operation on the first input value after order reversing and a second input value; and the result determining module is used for determining whether all the results of the logical AND operation are zero, if yes, the zero flag bit outputs 1, otherwise it outputs 0. In this way, the low-bit zero detecting module is used to detect the low-bit continuous zero bits in the first input value, then, the bitwise-AND module is used to retain the low-bit continuous zero bits in the first input value and the second input value, and finally, the result determining module can output the zero flag bit calculation result which can also be obtained through multiplication of the first input value and the second input value. It is not necessary to calculate the zero flag bit according to the calculation result after the first input value and the second input value are multiplied. The zero flag bit can be obtained through parallel computing of the result determining module, and the first input value and the second input value to improve the operation speed of the multiplier.

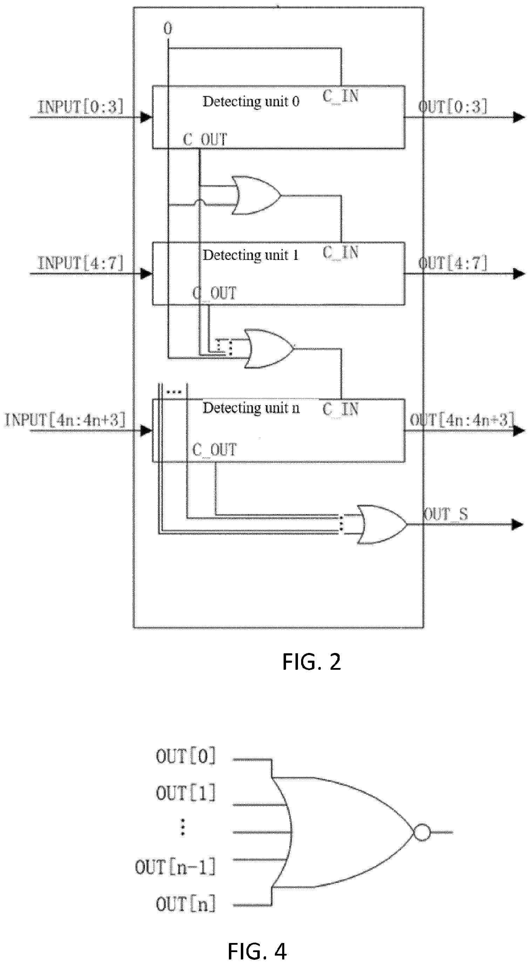

As shown in FIG. 2, the low-bit zero detecting module includes a plurality of detecting units in cascade connection; the cascading port of the later detecting unit is connected to the flag bit ports of all previous detecting units through an OR gate; each detecting unit is provided with input ports and output ports, where the number of the input ports is the same as that of the output ports; the input ports are used for determining whether there is a value of 1 in the input value, if yes, the flag bit outputs 1, the output of the detecting unit is the value corresponding to value 1 behind the bit from the bit to the highest bit of 1, otherwise the flag bit outputs 0, and the output of the detecting unit is directly the input value. In this way, the first input value is equally divided into multiple parts through multiple detecting units, and each part is used as input. At the same time, the corresponding detecting unit is input to judge whether the value 1 is included. In addition, by virtue of the OR gate, the detecting results of all the previous detecting units are introduced into the subsequent detecting unit to assist the judgment, so as to increase the calculation speed of the whole low-bit zero detecting module.

Specifically, as shown in FIG. 3, the detecting unit includes four input ports and four output ports from low bit to high bit, namely, In0, In1, In2 and In3, and OutO, Out1, Out2 and Out3; the input port In0 is connected to the output port OutO through two NOT gates and one OR gate sequentially connected in series to form a first path; the input port In1 is connected to the output port Out1 through a NOR gate, a NOT gate, and an OR gate sequentially connected in series to form a second path; the input port In2 is connected to the output port Out2 through a NOT gate, an NAND gate, and an OR gate sequentially connected in series to form a third path; and the input port In3 is connected to the output port Out2 through an NOR gate, an AND gate, and an OR gate sequentially connected in series to form a fourth path; the input port of the NOR gate in the second path is further connected to the input port In0, and the output port of the NOR gate in the second path is also connected to the input ports of the NAND gates in the third and fourth paths; the input port of the NOR gate in the fourth path is also connected to the input port In2; the output ports of the NOR gates in the second and fourth paths are also connected to the flag bit port through the NAND gate; and the input ports of the OR gates in the first, second, third, and fourth paths are all connected to the cascading port.

Since the input ports of the OR gates in the four paths are connected to the cascading port, the input ports correspond to the output ports of the four paths, and the cascading port is connected to the flag bit ports of all the previous detecting units through the OR gates, as long as one of the flag bit ports of all the previous detecting units outputs the value 1, regardless of the calculation result of the previous circuit in the four paths corresponding to the detecting unit, the output of the detecting unit will also be the value 1, the truth table is shown below, so that the value 1 in the bit in which the value 1 first appears from the bit to the highest bit can be quickly output to quickly finish the low-bit zero detection of the first input value.

**Truth Table of Detecting Units**

| INPUT | COUT | OUT (C IN=0) | OUT (C IN=1) |
|---|---|---|---|
| 0000 | 0 | 0000 | 1111 |
| 0001 | 1 | 1111 | 1111 |
| 0010 | 1 | 1110 | 1111 |
| 0011 | 1 | 1111 | 1111 |
| 0100 | 1 | 1100 | 1111 |
| 0101 | 1 | 1111 | 1111 |
| 0110 | 1 | 1110 | 1111 |
| 0111 | 1 | 1111 | 1111 |
| 1000 | 1 | 1000 | 1111 |
| 1001 | 1 | 1111 | 1111 |
| 1010 | 1 | 1110 | 1111 |
| 1011 | 1 | 1111 | 1111 |
| 1100 | 1 | 1100 | 1111 |
| 1101 | 1 | 1111 | 1111 |
| 1110 | 1 | 1110 | 1111 |
| 1111 | 1 | 1111 | 1111 |

The input ports of the bitwise-AND module from low bit to high bit are connected to the output ports of the low-bit zero detecting module from high bit to low bit to reverse the order of the first input value bit by bit after replacement of the value 1. Through this type of connection, no additional module is needed, and the function of reversing in order can be realized only by wiring, which is simple and reliable. Then, multiple AND gates are used to carry out bitwise-AND logical operation on the first input value and the second input value. Since the low continuous zero of the first input value has been transferred to the high bit, and the low continuous zero of the second input value is still in the low bit, the low continuous zero bits of the two input values are retained make preparations for subsequent judgment.

The result determining module is provided with the NOR gate, and the output ports of the bitwise-AND module are connected to the input port of the NOR gate. As shown in Fig. 4, the output judgment of the zero flag bit can be completed by using the function of the NOR gate. When the output is 1, it indicates that all the inputs of the NOR gate are 0, that is, the number of low-bit continuous zero bits in the first input value and the second input value is greater than or equal to the number of bits of any input value, and the multiplication result of the first input value and the second input value is 0; when the output is 0, it indicates that the input of the NOT gate is not all 0, that is, the number of the low-bit continuous zero bits in the first input value and the second input value is less than the number of bits of any input value, and the multiplication result of the first input value and the second input value is not 0.

The generating circuit of the present invention is used for application of the multiplier through which the number of bits of the multiplication operation result is the same as that of the multiplicator and that of the multiplicand, for example, the input is a binary numerical value of two 32-bit bits, and only a multiplier with a low 32-bit multiplication result is taken, or the input is a binary numerical value of two 32-bit bits, and the normal multiplication result, namely, a 64-bit multiplier is taken, or the input is a binary numerical value of two 64-bit bits, and only a multiplier with a low 32-bit multiplication result is taken, or the input is a binary numerical value of two numbers with different bit numbers, and the multiplier whose number of bits of the multiplication result is different from that of the first input value and that of the second input value is taken. When the generating circuit of the present invention is used, the specific processing is as follows:

In the first case, the generating circuit of the present invention can be directly used;

In the second case, it is only necessary to extend the zerofill in the high bit of the binary numerical value of two 32-bit bits as input to 64-bit bits;

In the third case, only the low 32 bits of the binary numerical value of the input two 64-bit bits are intercepted as input again;

In the fourth case, refer to the above three cases, the binary numerical values of the two inputs are processed into the number of bits the same as the number of bits of the multiplication operation result, and the processed binary numerical values are used as inputs once more.

The present invention further provides a multiplier of the generating circuit described above for the multiplier zero flag bit, and the multiplier includes the generating circuit described above for the multiplier zero flag bit and a multiplication circuit.

The present invention further provides a detecting method of a fixed-length multiplication zero flag bit, and the detecting method includes the steps as follows:
S1. Detecting the first input value bit by bit from low bit to high bit until discovering the bit in which the value of 1 appears first, and replacing all bits from the bit to the highest bit with 1;

In order to ensure the consistency of detection, the number of bits of the first input value and that of the second input value shall be the same. When the number of bits is not the same, the manner of zerofill in the high bit is adopted to the input value whose number of bits is fewer to enable the number of bits of the first input value and that of the second input value to be the same.

S2. Reversing the order of the first input value bit by bit after replacement, and then carrying out a bitwise-AND logical operation on the first input value after order reversing and a second input value; Since the order reversing operation bit by bit is carried out to have transferred the low continuous zero of the first input value to the high bit, and the low continuous zero of the second input value is still in the low bit, the low continuous zero bits of the two input values can be retained through the bitwise-AND logical operation to make preparations for subsequent judgment.

S3. Determining whether all the results of the logical operation are zero, if yes, the zero flag bit outputs 1, otherwise it outputs 0.

When the output is 0, that is, the number of low-bit continuous zero bits in the first input value and the second input value is greater than or equal to the number of bits of any input value, and if the multiplication result of the first input value and the second input value is 0, the zero flag bit outputs 1; if the input is not all 0, that is, the number of the low-bit continuous zero bits in the first input value and the second input value is less than the number of bits of any input value, and if the multiplication result of the first input value and the second input value is not 0, the zero flag bit outputs 0.

The detecting method, disclosed by the present invention, is used for the application of the multiplier through which the number of bits of the multiplication operation result is the same as that of the multiplicator and that of the multiplicand. According to the number of bits of the multiplication operation result, the number of bits of the first input value and that of the second input value are processed by zerofill in the high bit or interception in the low bit, so that the number of bits of the multiplication operation result is the same as that of the first input value and that of the second input value.

Specifically, when the number of bits of the first input value is the same as that of the second input value but differs from that of the multiplication operation result, according to the number of bits of the multiplication operation result, the manner of zerofill in the high bits of the first input value and the second input value is adopted or the manner of intercepting the number of bits which is the same as that of the multiplication operation result from the low bits of the first input value and the second input value is adopted to ensure that the number of bits of the multiplication operation result is the same as that of the first input value and that of the second input value;

When the first input value, the second input value, and the multiplication operation result have different numbers of bits, according to the number of bits of the multiplication operation result, the manner of zerofill in the high bits of the first input value or/and the second input value is adopted or the manner of intercepting the number of bits which is the same as that of the multiplication operation result from the low bits of the first input value or/and the second input value is adopted to ensure that the number of bits of the multiplication operation result is the same as that of the first input value and that of the second input value.

Although the embodiments of the present invention have been described above, those skilled in the art can understand that the embodiments are only examples and various changes or modifications can be made to these embodiments. The scope of the present invention is defined by the appended claims.

## Claims

1. A generating circuit for the zero flag bit of a multiplier, **characterized in that** the generating circuit is used for application of the multiplier which requires the number of bits of the to-be-solved multiplication operation result to be the same as that of the multiplicator and that of the multiplicand and comprises a low-bit zero detecting module, a bitwise-AND module, and a result determining module, wherein the low-bit zero detecting module is used for discovering the bit in which the value of 1 appears first in the first input value from low bit to high bit, and replacing all bits from the bit to the highest bit with 1; the bitwise-AND module is used for reversing the order of the first input value bit by bit after replacement, and then carrying out a bitwise-AND logical operation on the first input value after order reversing and a second input value; and the result determining module is used for determining whether all the results of the logical AND operation are zero, if yes, the zero flag bit outputs 1, otherwise it outputs 0.

2. The generating circuit for the zero flag bit of a multiplier according to claim 1, **characterized in that** the low-bit zero detecting module comprises a plurality of detecting units in cascade connection; the cascading port of the later detecting unit is connected to the flag bit ports of all previous detecting units through an OR gate; each detecting unit is provided with input ports and output ports, wherein the number of the input ports is the same as that of the output ports; the input ports are used for determining whether there is a value of 1 in the input value, if yes, the flag bit outputs 1, the output of the detecting unit is the value corresponding to value 1 behind the bit from the bit to the highest bit of 1, otherwise the flag bit outputs 0, and the output of the detecting unit is directly the input value.

3. The generating circuit for the zero flag bit of a multiplier according to claim 2, **characterized in that** the detecting unit comprises four input ports and four output ports from low bit to high bit, namely, In0, In1, In2 and In3, and OutO, Out1, Out2 and Out3, wherein
the input port In0 is connected to the output port OutO through two NOT gates and one OR gate sequentially connected in series to form a first path; the input port In1 is connected to the output port Out1 through a NOR gate, a NOT gate, and an OR gate sequentially connected in series to form a second path; the input port In2 is connected to the output port Out2 through a NOT gate, an NAND gate, and an OR gate is sequentially connected in series to form a third path; and the input port In3 is connected to the output port Out2 through an NOR gate, an AND gate, and an OR gate sequentially connected in series to form a fourth path;
the input port of the NOR gate in the second path is further connected to the input port In0, and the output port of the NOR gate in the second path is also connected to the input ports of the NAND gates in the third and fourth paths;
the input port of the NOR gate in the fourth path is also connected to the input port In2;
the output ports of the NOR gates in the second and fourth paths are also connected to the flag bit port through the NAND gate; and
the input ports of the OR gates in the first, second, third, and fourth paths are all connected to the cascading port.

4. The generating circuit for the zero flag bit of a multiplier according to claim 1, **characterized in that** the result determining module is provided with the NOR gate.

5. A multiplier of the generating circuit for the multiplier zero flag bit according to claim 1, **characterized in that** the multiplier comprises the generating circuit for the multiplier zero flag bit according to any one of claims 1-4 and a multiplication circuit.

6. A detecting method for the zero flag bit of fixed-length multiplication, **characterized in that** the detecting method is used for application of the multiplier through which the number of bits of the multiplication operation result is the same as that of the multiplicator and that of the multiplicand and comprises the following steps:
S1. detecting the first input value bit by bit from low bit to high bit until discovering the bit in which the value of 1 appears first, and replacing all bits from the bit to the highest bit with 1;
S2. reversing the order of the first input value bit by bit after replacement, and then carrying out a bitwise-AND logical operation on the first input value after order reversing and a second input value; and
S3. determining whether all the results of the bitwise-AND logical operation in S2 are zero, if yes, the zero flag bit outputs 1, otherwise it outputs 0.

7. The detecting method for the zero flag bit of fixed-length multiplication according to claim 6, **characterized in that** according to the number of bits of the multiplication operation result, the number of bits of the first input value and that of the second input value are processed by zerofill in the high bit or interception in the low bit, so that the number of bits of the multiplication operation result is the same as that of the first input value and that of the second input value.

8. The detecting method for the zero flag bit of fixed-length multiplication according to claim 7, **characterized in that** when the number of bits of the first input value is the same as that of the second input value but differs from that of the multiplication operation result, according to the number of bits of the multiplication operation result, the manner of zerofill in the high bits of the first input value and the second input value is adopted or the manner of intercepting the number of bits which is the same as that of the multiplication operation result from the low bits of the first input value and the second input value is adopted to ensure that the number of bits of the multiplication operation result is the same as that of the first input value and that of the second input value,
when the first input value, the second input value, and the multiplication operation result have different numbers of bits, according to the number of bits of the multiplication operation result, the manner of zerofill in the high bits of the first input value or/and the second input value is adopted or the manner of intercepting the number of bits which is the same as that of the multiplication operation result from the low bits of the first input value or/and the second input value is adopted to ensure that the number of bits of the multiplication operation result is the same as that of the first input value and that of the second input value.

## Patentansprüche

1. Erzeugungsschaltung für das Null-Flag-Bit eines Multiplizierers, **dadurch gekennzeichnet, dass** die Erzeugungsschaltung zu einer Anwendung des Multiplizierers verwendet wird, die erfordert, dass die Anzahl von Bits des zu lösenden Multiplikationsoperationsergebnisses die gleiche ist wie diejenige des Multiplikators und diejenige des Multiplikanden, und ein Modul zum Erkennen von Nullen mit niedrigem Bit ein Modul für bitweise UND-Verknüpfung und ein Ergebnisbestimmungsmodul umfasst, wobei das Modul zum Erkennen von Nullen mit niedrigem Bit verwendet wird, um das Bit zu entdecken, in dem der Wert 1 als erstes in dem ersten Eingangswert von dem niedrigen Bit bis zu dem hohen Bit erscheint, und um sämtliche Bits von diesem Bit bis zu dem höchsten Bit durch 1 zu ersetzen; das Modul für bitweise UND-Verknüpfung verwendet wird, um die Reihenfolge des ersten Eingangswertes nach dem Ersetzen Bit für Bit umzukehren und dann eine bitweise logische UND-Verknüpfung an dem ersten Eingangswert nach einem Umkehren der Reihenfolge und an einem zweiten Eingangswert auszuführen; und das Ergebnisbestimmungsmodul verwendet wird, um zu bestimmen, ob sämtliche Ergebnisse der logischen UND-Verknüpfung Null sind, wobei im Falle von ja, das Null-Flag-Bit 1 ausgibt, andernfalls 0 ausgibt.

2. Erzeugungsschaltung für das Null-Flag-Bit eines Multiplizierers nach Anspruch 1, **dadurch gekennzeichnet, dass** das Modul zum Erkennen von Nullen mit niedrigem Bit mehrere Erkennungseinheiten in Kaskadenschaltung aufweist; der Kaskadenanschluss der späteren Erkennungseinheit mit den Flag-Bit-Anschlüssen sämtlicher vorherigen Erkennungseinheiten über ein ODER-Gatter verbunden ist; jede Erkennungseinheit mit Eingangsanschlüssen und Ausgangsanschlüssen versehen ist, wobei die Anzahl der Eingangsanschlüsse die gleiche ist wie diejenige der Ausgangsanschlüsse; die Eingangsanschlüsse verwendet werden, um zu bestimmen, ob es einen Wert von 1 in dem Eingangswert gibt, wobei im Falle von ja, das Flag-Bit 1 ausgibt, der Ausgang der Erkennungseinheit der Wert ist, der dem Wert 1 hinter dem Bit von diesem Bit bis zu dem höchsten Bit von 1 entspricht, andernfalls das Flag-Bit 0 ausgibt, und der Ausgang der Erkennungseinheit direkt der Eingangswert ist.

3. Erzeugungsschaltung für das Null-Flag-Bit eines Multiplizierers nach Anspruch 2, **dadurch gekennzeichnet, dass** die Erkennungseinheit vier Eingangsanschlüsse und vier Ausgangsanschlüsse von dem niedrigen Bit bis zu dem hohen Bit aufweist, nämlich In0, In1, In2 und In3 sowie OutO, Out1, Out2 und Out3, wobei
der Eingangsanschluss In0 mit dem Ausgangsanschluss OutO durch zwei NICHT-Gatter und ein ODER-Gatter verbunden ist, die sequentiell in Reihe verbunden sind, um einen ersten Pfad zu bilden; der Eingangsanschluss In1 mit dem Ausgangsanschluss Out1 durch ein NOR-Gatter, ein NICHT-Gatter und ein ODER-Gatter verbunden ist, die sequentiell in Reihe verbunden sind, um einen zweiten Pfad zu bilden; der Eingangsanschluss In2 mit dem Ausgangsanschluss Out2 über ein NICHT-Gatter, ein NAND-Gatter und ein ODER-Gatter verbunden ist, die sequentiell in Reihe verbunden sind, um einen dritten Pfad zu bilden; und der Eingangsanschluss In3 mit dem Ausgangsanschluss Out2 über ein NOR-Gatter, ein UND-Gatter und ein ODER-Gatter verbunden ist, die sequentiell in Reihe verbunden sind, um einen vierten Pfad zu bilden;
der Eingangsanschluss des NOR-Gatters in dem zweiten Pfad ferner mit dem Eingangsanschluss In0 verbunden ist, und der Ausgangsanschluss des NOR-Gatters in dem zweiten Pfad auch mit den Eingangsanschlüssen der NAND-Gatter in dem dritten und vierten Pfad verbunden ist;
der Eingangsanschluss des NOR-Gatters in dem vierten Pfad auch mit dem Eingangsanschluss In2 verbunden ist;
die Ausgangsanschlüsse der NOR-Gatter in dem zweiten und vierten Pfad über das NAND-Gatter auch mit dem Flag-Bit-Anschluss verbunden sind; und
die Eingangsanschlüsse der ODER-Gatter in dem ersten, zweiten, dritten und vierten Pfad sämtliche mit dem Kaskadenanschluss verbunden sind.

4. Erzeugungsschaltung für das Null-Flag-Bit eines Multiplizierers nach Anspruch 1, **dadurch gekennzeichnet, dass** das Ergebnisbestimmungsmodul mit dem NOR-Gatter versehen ist.

5. Multiplizierer der Erzeugungsschaltung für das Null-Flag-Bit des Multiplizierers nach Anspruch 1, **dadurch gekennzeichnet, dass** der Multiplizierer die Erzeugungsschaltung für das Null-Flag-Bit des Multiplizierers nach einem der Ansprüche 1-4 und eine Multiplikationsschaltung aufweist.

6. Erkennungsverfahren für das Null-Flag-Bit einer Multiplikation mit fester Länge, **dadurch gekennzeichnet, dass** das Erkennungsverfahren zur Anwendung des Multiplizierers verwendet wird, durch den die Anzahl von Bits des Multiplikationsoperationsergebnisses die gleiche ist wie diejenige des Multiplikators und diejenige des Multiplikanden, und die folgenden Schritte umfasst:
S1. Erkennen des ersten Eingangswertes Bit für Bit von dem niedrigen Bit bis zu dem hohen Bit, bis das Bit entdeckt wird, in dem der Wert 1 zuerst erscheint, und Ersetzen sämtlicher Bits von diesem Bit bis zu dem höchsten Bit durch 1;
S2. Umkehren der Reihenfolge des ersten Eingangswertes Bit für Bit nach dem Ersetzen und dann Ausführen einer bitweisen logischen UND-Verknüpfung an dem ersten Eingangswert nach dem Umkehren der Reihenfolge und an einem zweiten Eingangswert; und
S3. Bestimmen, ob sämtliche Ergebnisse der bitweisen logischen UND-Verknüpfung in S2 Null sind, wobei im Falle von ja, das Null-Flag-Bit 1 ausgibt, andernfalls 0 ausgibt.

7. Erkennungsverfahren für das Null-Flag-Bit der Multiplikation mit fester Länge nach Anspruch 6, **dadurch gekennzeichnet, dass** entsprechend der Anzahl von Bits des Multiplikationsoperationsergebnisses die Anzahl von Bits des ersten Eingangswertes und diejenige des zweiten Eingangswertes durch Nullauffüllen in dem hohen Bit oder Abfangen in dem niedrigen Bit verarbeitet werden, so dass die Anzahl von Bits des Multiplikationsoperationsergebnisses die gleiche ist wie diejenige des ersten Eingangswertes und diejenige des zweiten Eingangswertes.

8. Erkennungsverfahren für das Null-Flag-Bit der Multiplikation mit fester Länge nach Anspruch 7, **dadurch gekennzeichnet, dass**, wenn die Anzahl von Bits des ersten Eingangswertes die gleiche ist wie diejenige des zweiten Eingangswertes, sich aber von derjenigen des Multiplikationsoperationsergebnisses unterscheidet, entsprechend der Anzahl von Bits des Multiplikationsoperationsergebnisses die Art des Nullauffüllens in den hohen Bits des ersten Eingangswertes und des zweiten Eingangswertes angenommen wird oder die Art des Abfangens der Anzahl von Bits, die die gleiche ist wie diejenige des Multiplikationsoperationsergebnisses, von den niedrigen Bits des ersten Eingangswertes und des zweiten Eingangswertes angenommen wird, um sicherzustellen, dass die Anzahl von Bits des Multiplikationsoperationsergebnisses die gleiche ist wie diejenige des ersten Eingangswertes und diejenige des zweiten Eingangswertes,
wenn der erste Eingangswert, der zweite Eingangswert und das Multiplikationsoperationsergebnis unterschiedliche Anzahlen von Bits haben, entsprechend der Anzahl von Bits des Multiplikationsoperationsergebnisses die Art des Nullauffüllens in den hohen Bits des ersten Eingangswertes oder/und des zweiten Eingangswertes angenommen wird oder die Art des Abfangens der Anzahl von Bits, die die gleiche ist wie diejenige des Multiplikationsoperationsergebnisses, von den niedrigen Bits des ersten Eingangswertes oder/und des zweiten Eingangswertes angenommen wird, um sicherzustellen, dass die Anzahl von Bits des Multiplikationsoperationsergebnisses die gleiche ist wie diejenige des ersten Eingangswertes und diejenige des zweiten Eingangswertes.

## Revendications

1. Circuit générateur pour le bit indicateur de zéro d'un multiplicateur, **caractérisé en ce que** le circuit générateur est utilisé pour une application du multiplicateur qui exige que le nombre de bits du résultat de l'opération de multiplication à résoudre soit le même que celui du multiplicateur et du multiplicande, et comprend un module de détection de zéro de bit bas, un module ET bit à bit et un module de détermination de résultat, dans lequel le module de détection de zéro de bit bas est utilisé pour découvrir le bit dans lequel la valeur 1 apparaît en premier dans la première valeur d'entrée depuis le bit bas jusqu'au bit haut, et pour remplacer tous les bits depuis le bit jusqu'au bit le plus haut par 1 ; le module ET bit à bit est utilisé pour inverser l'ordre de la première valeur d'entrée bit par bit après le remplacement, puis pour mettre en œuvre une opération logique ET bit à bit sur la première valeur d'entrée après une inversion d'ordre et sur une deuxième valeur d'entrée ; et le module de détermination de résultat est utilisé pour déterminer si tous les résultats de l'opération ET logique sont nuls : si oui, le bit indicateur de zéro sort 1, sinon il sort 0.

2. Circuit générateur pour le bit indicateur de zéro d'un multiplicateur selon la revendication 1, **caractérisé en ce que** le module de détection de zéro de bit bas comprend une pluralité d'unités de détection connectées en cascade; le port en cascade de l'unité de détection ultérieure est connecté aux ports de bit indicateur de toutes les unités de détection antérieures via une porte OU ; chaque unité de détection est pourvue de ports d'entrée et de ports de sortie, dans lequel le nombre de ports d'entrée est le même que celui des ports de sortie ; les ports d'entrée sont utilisés pour déterminer s'il y a une valeur de 1 dans la valeur d'entrée : si oui, le bit indicateur sort 1, la sortie de l'unité de détection est la valeur correspondant à la valeur 1 derrière le bit, depuis le bit jusqu'au bit le plus haut de 1, sinon le bit indicateur sort 0 et la sortie de l'unité de détection est directement la valeur d'entrée.

3. Circuit générateur du bit indicateur de zéro d'un multiplicateur selon la revendication 2, **caractérisé en ce que** l'unité de détection comprend quatre ports d'entrée et quatre ports de sortie depuis le bit bas jusqu'au bit haut, à savoir In0, In1, In2 et In3, et OutO, Out1, Out2 et Out3, dans lequel
le port d'entrée In0 est connecté au port de sortie OutO via deux portes NON et une porte OU connectées séquentiellement en série pour former un premier chemin ; le port d'entrée In1 est connecté au port de sortie Out1 via une porte NON-OU, une porte NON et une porte OU connectées séquentiellement en série pour former un deuxième chemin ; le port d'entrée In2 est connecté au port de sortie Out2 via une porte NON, une porte NON-ET et une porte OU connectées séquentiellement en série pour former un troisième chemin ; et le port d'entrée In3 est connecté au port de sortie Out2 via une porte NON-OU, une porte ET et une porte OU connectées séquentiellement en série pour former un quatrième chemin ;
le port d'entrée de la porte NON-OU dans le deuxième chemin est en outre connecté au port d'entrée In0, et le port de sortie de la porte NON-OU dans le deuxième chemin est également connecté aux ports d'entrée des portes NON-ET dans les troisième et quatrième chemins ;
le port d'entrée de la porte NON-OU dans le quatrième chemin est également connecté au port d'entrée In2 ;
les ports de sortie des portes NON-OU dans les deuxième et quatrième chemins sont également connectés au port de bit indicateur via la porte NON-ET ; et
les ports d'entrée des portes OU dans les premier, deuxième, troisième et quatrième chemins sont tous connectés au port en cascade.

4. Circuit générateur pour le bit indicateur de zéro d'un multiplicateur selon la revendication 1, **caractérisé en ce que** le module de détermination de résultat est pourvu de la porte NON-OU.

5. Multiplicateur du circuit générateur pour le bit indicateur de zéro du multiplicateur selon la revendication 1, **caractérisé en ce que** le multiplicateur comprend le circuit générateur pour le bit indicateur de zéro du multiplicateur selon l'une quelconque des revendications 1 à 4 et un circuit de multiplication.

6. Procédé de détection du bit indicateur de zéro d'une multiplication de longueur fixe, **caractérisé en ce que** le procédé de détection est utilisé pour l'application du multiplicateur via lequel le nombre de bits du résultat de l'opération de multiplication est le même que celui du multiplicateur et celui du multiplicande, et comprend les étapes suivantes :
S1. détection de la première valeur d'entrée bit par bit depuis le bit bas jusqu'au bit haut jusqu'à découvrir le bit où la valeur 1 apparaît en premier, et remplacement de tous les bits depuis le bit jusqu'au bit le plus haut par 1 ;
S2. inversion de l'ordre de la première valeur d'entrée bit par bit après le remplacement, puis mise en œuvre d'une opération logique ET bit à bit sur la première valeur d'entrée après l'inversion d'ordre et une deuxième valeur d'entrée ; et
S3. détermination du fait que tous les résultats de l'opération logique ET bit à bit dans S2 sont nuls : si oui, le bit indicateur de zéro sort 1, sinon il sort 0.

7. Procédé de détection du bit indicateur de zéro d'une multiplication de longueur fixe selon la revendication 6, **caractérisé en ce que** selon le nombre de bits du résultat de l'opération de multiplication, le nombre de bits de la première valeur d'entrée et celui de la deuxième valeur d'entrée sont traités par remplissage à zéro dans le bit haut ou interception dans le bit bas, de telle sorte que le nombre de bits du résultat de l'opération de multiplication soit le même que celui de la première valeur d'entrée et celui de la deuxième valeur d'entrée.

8. Procédé de détection du bit indicateur de zéro d'une multiplication de longueur fixe selon la revendication 7, **caractérisé en ce que** quand le nombre de bits de la première valeur d'entrée est le même que celui de la deuxième valeur d'entrée mais diffère de celui du résultat de l'opération de multiplication, en fonction du nombre de bits du résultat de l'opération de multiplication, le mode de remplissage à zéro des bits hauts de la première valeur d'entrée et de la deuxième valeur d'entrée est adopté ou le mode d'interception du nombre de bits qui est le même que celui du résultat de l'opération de multiplication à partir des bits bas de la première valeur d'entrée et de la deuxième valeur d'entrée est adopté pour garantir que le nombre de bits du résultat de l'opération de multiplication est le même que celui de la première valeur d'entrée et celui de la deuxième valeur d'entrée,
quand la première valeur d'entrée, la deuxième valeur d'entrée et le résultat de l'opération de multiplication ont des nombres de bits différents, en fonction du nombre de bits du résultat de l'opération de multiplication, le mode de remplissage à zéro des bits hauts de la première valeur d'entrée et/ou de la deuxième valeur d'entrée est adopté ou le mode d'interception du nombre de bits qui est le même que celui du résultat de l'opération de multiplication à partir des bits bas de la première valeur d'entrée et/ou de la deuxième valeur d'entrée est adopté pour garantir que le nombre de bits du résultat de l'opération de multiplication est le même que celui de la première valeur d'entrée et celui de la deuxième valeur d'entrée.
